**Europäisches Patentamt**

**European Patent Office**

**Office européen des brevets**

(19)

(11) Veröffentlichungsnummer: **0 161 635**
**B1**

# EUROPÄISCHE PATENTSCHRIFT

(12)

(45) Veröffentlichungstag der Patentschrift:
**14.09.88**

(21) Anmeldenummer: **85105696.0**

(22) Anmeldetag: **09.05.85**

(51) Int. Cl.⁴: **G 01 N 27/26**

(54) **Vorrichtung zum Eluieren von elektrisch geladenen Makromolekülen, insbesondere Biopolymeren (Nukleinsäuren und Proteinen.**

(30) Priorität: **09.05.84 DE 3417180**

(43) Veröffentlichungstag der Anmeldung:
**21.11.85 Patentblatt 85/47**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**DE - A - 3 147 611**

(73) Patentinhaber: **Max-Planck-Gesellschaft zur Förderung der Wissenschaften e.V., Bunsenstrasse 10, D-3400 Göttingen (DE)**

(72) Erfinder: **Diekmann, Stephan, Ulmenweg 2, D-3406 Bovenden (DE)**

(74) Vertreter: **Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86 (DE)**

## Beschreibung

Die Erfindung betrifft eine Vorrichtung nach dem Oberbegriff des Anspruchs 1.

Bei einer nach der US-PS 3 989 612 bekannten Vorrichtung dieser Art liegt zwischen den Elektrodenräumen ein Gel-Aufnahmeraum, der von den Elektrodenräumen durch Fenster zugänglich ist. Der Gel-Aufnahmeraum kann nur ein Gelstück aufnehmen. Die eluierten, elektrisch geladenen Makromoleküle gelangen in einen der Elektrodenräume und haben in dem dort befindlichen Elektrolyten nur eine verhältnismässig geringe Konzentration. Zum Austausch eines Gelstücks muss die Vorrichtung in eine Vielzahl von Teilen zerlegt werden. Entsprechende Merkmale weist eine nach der US-PS 4 049 534 bekannte Vorrichtung auf.

Aufgabe der Erfindung ist es, eine einfach ausgebildete Vorrichtung nach dem Oberbegriff des Anspruchs 1 anzugeben, die einfach handhabbar ist, zu einer hohen Ausbeute an Makromolekülen, insbesondere Bipolymeren, in verhältnismässig kurzer Zeit führt und praktisch keiner Wartung bedarf.

Die Lösung dieser Aufgabe ist im Anspruch 1 angegeben.

Zur Handhabung der Vorrichtung öffnet man zunächst den Durchlass und füllt dann den Behälter mit dem auch als Puffer dienenden Elektrolyten niedriger Konzentration, sorgt dann dafür, dass der Elektrolyt alle Oberflächen benetzt, mit denen er in Berührung kommt, und legt gegebenenfalls aus Kontrollgründen die Elektroden an eine Testspannung, um den elektrischen Strom durch den Elektrolyten festzustellen. Dann senkt man den Elektrolytpegel bis unter den Boden der in dem Block befindlichen Wanne und gegebenenfalls auch bis unter den Boden der in Anspruch 2 angegebenen sitzförmigen Ausnehmung. Anschliessend werden die Gelstücke in die Wannen gelegt (z.B. ein Gelstück pro Wanne) und der Elektrolytpegel angehoben, bis jedes Gelstück von dem Elektrolyten bedeckt ist. Anschliessend wird die Salzlösung hoher Konzentration (gegebenenfalls angefärbt) in jeden der zur Elution benutzten Kanäle eingeführt und schliesslich der Elektrolytdurchlass im Block gesperrt.

Nunmehr wird durch Anlegen der Spannung die Elektrolyse durchgeführt. Die Maktromoleküle wandern im elektrischen Feld aus dem Gelstück hinaus, im Elektrolyten in den entsprechenden Kanal und dort in die Hochsalzlösung. Die Wanderung kann gegebenenfalls mit parallel wandernden Farbstoffen verfolgt werden. Die Makromoleküle, insbesondere Biopolymere, konzentrieren sich beim Eintritt in die Hochsalzlösung. Sind die Gelstücke eluiert, wird die Spannung abgeschaltet und der Elektrolytdurchlass geöffnet. Daraufhin wird durch Elektrolytentnahme aus dem Elektrolytdurchlass der Elektrolytpegel wieder bis unter den Boden der Wanne und gegebenenfalls der sitzförmigen Ausnehmungen abgesenkt und die Salzlösung mit den in ihr befindlichen Makromolekülen, insbesondere Biopolymeren, aus den Kanälen herauspipettiert. Durch Eingabe der herauspipettierten Salzlösung in Äthanol können die Biopolymere (und insbesondere die Nukleinsäuren) in bekannter Weise gefällt werden.

Besonders bemerkenswert ist, dass bei Anwendung der erfindungsgemässen Vorrichtung die Biopolymere, insbesondere die Nukleinsäuren, nur mit Materialien und Chemikalien in Kontakt kommen, mit denen sie während gängiger Arbeitsschritte ohnehin in Berührung kommen.

Herstellungstechnisch besondes vorteilhafte Ausbildungen der Vorrichtung sind in den Unteransprüchen angegeben.

Die Erfindung wird im folgenden an einem Ausführungsbeispiel unter Hinweis auf die beigefügten Zeichnungen beschrieben:

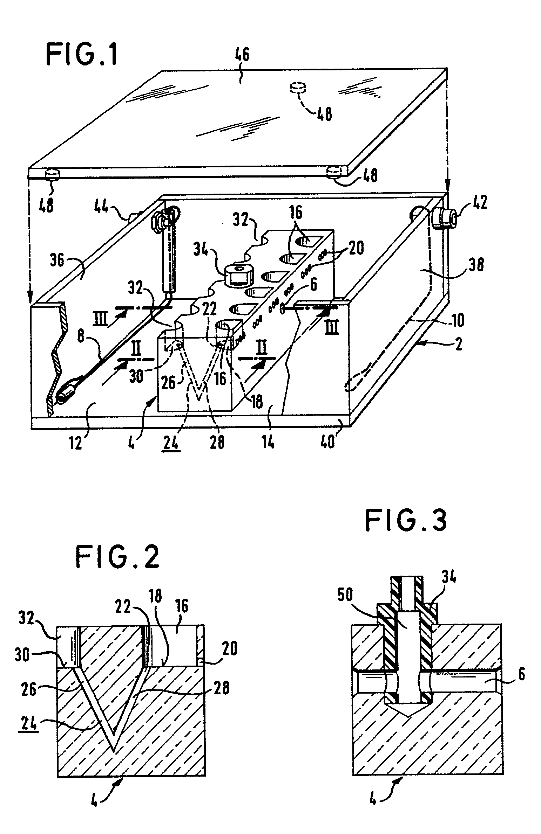

Fig. 1 zeigt die Vorrichtung perspektivisch.
Fig. 2 zeigt einen Schnitt längs der Linie II–II in Fig. 1.
Fig. 3 zeigt einen Schnitt längs der Linie III–III in Fig. 1.

Die Vorrichtung nach dem Ausführungsbeispiel weist einen Behälter 2 zur Aufnahme eines Elektrolyten auf, der durch einen Block 4 mit einem sperrbaren Elektrolytdurchlass 6 in zwei je eine Elektrode 8, 10 enthaltende Elektrodenräume 12, 14 unterteilt ist. In die Oberfläche des Blocks 4 sind in einer Reihe nebeneinander sechs Wannen 16 zur Aufnahme je eines Gelstücks eingelassen. Jede Wanne ist über drei in ihrer Seitenwand nächst ihrem Boden 18 befindliche erste Öffnungen 20 mit dem Elektrodenraum 14 verbunden und über eine in ihrem Boden 18 befindliche Öffnung 22 mit einem erst abfallenden und dann ansteigenden, in dem Elektrodenraum 12 mündenden Kanal 24 zur Aufnahme der Salzlösung verbunden. Jeder Kanal besteht aus zwei V-förmig zusammenstossenden geraden Abschnitten 26, 28, die in den Block 4 eingebohrt sind. Im vorliegenden Ausführungsbeispiel mündet der Kanal 24 auf der Seite des Elektrodenraums 12 im Boden 30 einer sitzförmigen Ausnehmung 32 des Blocks.

Der Durchlass 6 verläuft unter den Böden 18 der Wannen 16 und der Böden 30 der sitzförmigen Ausnehmungen 32.

In den Block 4 ist von oben ein den Durchlass 6 durchsetzendes, drehbares Hahnküken 34 mit einer axialen Anschlussbohrung 50 eingelassen.

Der Behälter 2 besteht aus Kunststoffglas. Die Elektroden 8, 10 sind Drähte, die längs gegenüberliegenden Wänden 36, 38 des Behälters auf dem Boden 40 des Behälters 2 verlegt sind und nach oben geführt zu Aussenanschlüssen 42, 44 nächst gegenüberliegenden Stellen der Oberkante des Behälters 2 verlaufen.

Der Behälter ist mit einem aufsetzbaren Deckel 46 verschlossen, der unterseitig mit Ansätzen 48 versehen ist, die sein Verrücken gegenüber dem Behälter 2 verhindern.

**Patentansprüche**

1. Vorrichtung zum Eluieren elektrisch geladener Makromoleküle, insbesondere Biopolymere, aus einem Gel durch elektrophoretische Überführung der Makromoleküle aus dem unter Puffer gelegten Gel in eine Salzlösung, mit einem Behälter (2) zur Aufnahme eines Elektrolyten, der durch wenigstens einen für den Elektrolyten durchlässigen Aufnahmeraum für ein Gelstück in zwei jeweils mindestens eine Elektrode (8, 10) enthaltende Elektrodenräume (12, 14) unterteilt ist, dadurch gekennzeichnet, dass die Elektrodenräume (12, 14) durch mit einem sperrbaren Elektrolytdurchlass (6) versehenen Block (4) voneinander getrennt sind und dass der wenigstens eine Aufnahmeraum für ein Gelstück durch eine in die Oberfläche des Blocks (4) eingelassene Wanne (16) gebildet ist, die über wenigstens eine in oder nächst ihrem Boden (18) befindliche erste Öffnung (20) mit dem einen Elektrodenraum (14) und über eine in oder nächst ihrem Boden befindliche zweite Öffnung (22) mit einem erst abfallenden und dann ansteigenden, in dem anderen Elektrodenraum (12) mündenden Kanal (24) zur Aufnahme der Salzlösung verbunden ist.

2. Vorrichtung nach Anspruch 1, dadurch gekennzeichnet, dass der Kanal (24) in den Block (4) eingearbeitet ist und in oder nächst dem Boden (30) einer sitzförmigen Ausnehmung (32) in der dem anderen Elektrodenraum (12) zugewandten Seite des Blocks mündet.

3. Vorrichtung nach Anspruch 1 oder 2, dadurch gekennzeichnet, dass der Kanal (24) V-förmig ist.

4. Vorrichtung nach einem der vorgenannten Ansprüche, dadurch gekennzeichnet, dass der Durchlass (6) unter den Böden (18, 30) der Wanne (16) und der sitzförmigen Ausnehmung (32) verläuft.

5. Vorrichtung nach einem der vorgenannten Ansprüche, dadurch gekennzeichnet, dass in den Block (4) ein von seiner Oberseite aus zugängliches Hahnküken (34) mit einer axialen Anschlussbohrung (50) eingelassen ist.

**Claims**

1. An apparatus for the elution of electrically charged macromolecules, in particular biopolymers, from a gel immersed in a buffer by electrophoretic transference of the macromolecules from the gel into a salt solution, having a container (2) for accommodating an electrolyte and which is divided into two electrode chambers (12, 14) each containing at least one electrode (8, 10) by at least one electrolyte-permeable chamber for receiving a piece of gel, characterised in that the electrode chambers (12, 14) are separated from one another by a block (4) provided with a closable electrolyte passage (6), and in that the at least one chamber for receiving a piece of gel comprises a trough (16) which is provided in the surface of the block (4) and which is connected via at least one first opening (20), situated in or near its bottom (18), with one electrode chamber (14) and via a second opening (22), situated in or near its bottom, with an initially descending and then ascending duct (24) opening into the other electrode chamber (12) which duct is for receiving the salt solution.

2. An apparatus according to Claim 1, characterised in that the duct (24) is incorporated in the block (4) and, on the side of the block facing the other electrode chamber (12), it opens into or near to the bottom (30) of a seat-like recess (32).

3. An apparatus according to Claim 1 or 2, characterised in that the duct (24) is V-shaped.

4. An apparatus according to any of the preceding Claims, characterised in that the passage (6) extends under the bottoms (18, 30) of the trough (16) and the seat-like recess (32).

5. An apparatus according to any of the preceding Claims, characterised in that the block (4) incorporates a cock valve (34) which is accessible from its top and which has an axial connecting bore (50).

**Revendications**

1. Appareil pour l'élution de macromolécules chargées électriquement, en particulier de polymères biologiques sur la base d'un gel, par transfert par électrophorèse des macromolécules à une solution saline à partir du gel tamponné, présentant une cuve (2) qui est destinée à recevoir un électrolyte et est subdivisée, par l'intermédiaire d'au moins un compartiment récepteur d'un fragment de gel, perméable à l'électrolyte, en deux chambres (12, 14) à électrodes logeant chacune au moins une électrode (8, 10), caractérisé par le fait que les chambres (12, 14) à électrodes sont séparées l'une de l'autre par un bloc (4) muni d'un passage obturable (6) d'écoulement traversant de l'électrolyte; et par le fait que le compartiment récepteur d'un fragment de gel, prévu au minimum, est formé par une auge (16) qui est encastrée dans la face supérieure du bloc (4), et est reliée à l'une (14) des chambres à électrodes par l'intermédiaire d'au moins un premier orifice (20) pratiqué dans ou à proximité de son fond (18) et, par l'intermédiaire d'un second orifice (22) pratiqué dans ou à proximité de son fond, à un canal (24) tout d'abord descendant, puis remontant, conçu pour recevoir la solution saline et débouchant dans l'autre chambre (12) à électrode.

2. Appareil selon la revendication 1, caractérisé par le fait que le canal (24) est ménagé dans le bloc (4) et débouche dans ou à proximité du fond (30) d'une échancrure (32) en forme de siège, dans la face du bloc tournée vers l'autre chambre (12) à électrode.

3. Appareil selon la revendication 1 ou 2, caractérisé par le fait que le canal (24) est configuré en V.

4. Appareil selon l'une des revendications précitées, caractérisé par le fait que le passage (6) d'écoulement traversant s'étend au-dessous des fonds (18, 30) de l'auge (16) et de l'échancrure (32) en forme de siège.

5. Appareil selon l'une des revendications précitées, caractérisé par le fait qu'un boisseau de robinet (34) à alésage axial de raccordement (50) est encastré dans le bloc (4), à partir de la face supérieure duquel il est accessible.

# FIG.1

# FIG.2

# FIG.3